## Europäisches Patentamt
## European Patent Office
## Office européen des brevets

(19)

(11) Veröffentlichungsnummer: **0 095 144**
**B1**

(12)

# EUROPÄISCHE PATENTSCHRIFT

(45) Veröffentlichungstag der Patentschrift:
02.04.86

(21) Anmeldenummer: 83104946.5

(22) Anmeldetag: 19.05.83

(51) Int. Cl.⁴: **C 02 F 1/44**, C 10 K 1/00,
C 10 J 3/00, B 01 D 13/00

(54) **Behandlung von Gaskondensaten.**

(30) Priorität: 26.05.82 DE 3219701

(43) Veröffentlichungstag der Anmeldung:
30.11.83 Patentblatt 83/48

(45) Bekanntmachung des Hinweises auf die Patenterteilung:
02.04.86 Patentblatt 86/14

(84) Benannte Vertragsstaaten:
BE FR IT LU NL SE

(56) Entgegenhaltungen:
EP - A - 0 012 456
DE - A - 2 542 055
DE - A - 2 730 528
US - A - 4 170 550

JOURNAL WATER POLLUTION CONTROL FEDERATION, Band 51, Nr. 11, November 1979, Seiten 2752-2763, Washington D.C., USA S.L. KLEMETSON et al.: "Filtration of phenolic compounds in coal gasification wastewater"
CHEMICAL ABSTRACTS, Band 86, nr. 24, 13. Juni 1977, Seite 160, Nr. 174029g, Columbus, Ohio, USA YU.I. DYTNERSKII et al.: "Membrane methods of solution separation and their possible use in by-product coke manufacture"
CHEMICAL ABSTRACTS, Band 85, Nr. 2, 12. Juli 1976,

(73) Patentinhaber: Carl Still GmbH & Co. KG,
Kaiserwall 17-23, D-4350 Recklinghausen (DE)

(72) Erfinder: Breidenbach, Dieter, Dr., Meisenweg 20,
D-4355 Waltrop (DE)
Erfinder: Mosebach, Wilhelm, Jakob-Koenen-Strasse 11,
D-4618 Kamen-Methler (DE)
Erfinder: Dellmann, Winfried, Dresdener Strasse 13,
D-4618 Kamen (DE)

(74) Vertreter: Dahlkamp, Heinrich-Leo, Dipl.-Ing., c/o Firma
Carl Still GmbH & Co. KG Kaiserwall 17 - 23,
D-4350 Recklinghausen (DE)

(56) Entgegenhaltungen: (Fortsetzung)
Seite 301, Nr. 10062r, Columbus, Ohio, USA
CHEMICAL ENGINEERING PROGRESS, Band 77, nr. 10, Oktober 1981, Seiten 63-67, New York, USA T.M. FOSBERG et al.: "Selecting energy-efficient wastewater treatment systems"

Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Behandlung von Gaskondensaten aus der Verkokung.

Bei der thermischen Zersetzung der Steinkohle im Koksofen fällt ein Rohgas (Destillationsgas) an, das in seiner Menge und Zusammensetzung von den jeweiligen Betriebsbedingungen und von der Art der Kokskohle abhängig ist. Zu den Bestandteilen des Gases gehören $CO_2$, $CO$, $H_2$, $CH_4$, schwere Kohlenwasserstoffe, $N_2$ und $O_2$. Im Rohgas befindet sich Teer, Rohbenzol, Rohnaphthalin, Ammoniak und Schwefelwasserstoff. Ferner enthält das Gas einen wesentlichen Anteil an Wasserdampf. Der Dampfanteil des Gases setzt sich zusammen aus dem Wassergehalt des Rohstoffes Kohle und Bildungswasser, das durch teilweise Oxidation des in der Kohle enthaltenen Wasserstoffs bei der thermischen Zersetzung der Kohle im Koksofen entsteht.

Bei der Kühlung der Gase fallen Kondensate an, die je nach Rohstoffen und Betriebsbedingungen beim Verkoken verschieden stark mit Inhaltsstoffen belastet sind. Wesentliche Bestandteile der Kondensate sind Sink- und Schwebestoffe sowie Teeröle. Ferner finden sich in den Gaskondensaten Phenole, Pyridine und einige Mengen Salze, z. B. Ammonsalze.

Bei der Aufarbeitung der Kokereigase entstehen ferner an vielen Stellen weitere Kondensate. Das ist beispielsweise in der Benzolaufarbeitung, Schwefelsäureanlage und Gasverdichtung der Fall.

Die anfallenden Gaskondensate werden möglichst weitgehend aufgearbeitet und im Betrieb wieder verwendet, um die Abwassermenge minimal zu halten. In diesem Sinne ist in der Vergangenheit ein abwasserloser Kokereibetrieb unter Verwendung des behandelten Gaskondensates als Kokslöschwasser angestrebt worden. Dieses Verfahren konnte sich jedoch nicht durchsetzen, da der Salzgehalt, insbesondere der Chloridgehalt, der Gaskondensate sich als zu hoch erwiesen hat und Beeinträchtigungen der Umwelt eintraten.

Aus der Literaturstelle „Journal of the Water Pollution Control Federation", Bd. 51, Nr. 11, November 1979, S. 2752 f ist ein Verfahren zur Aufarbeitung von Abwässern aus der Kohledruckvergasung bekannt, wobei es in erster Linie darum geht, mit Hilfe einer Umkehrosmose oder Ultrafiltration die Phenolbestandteile zu reduzieren. Dabei wird die aus einem Scrubber-Decanter mit direkter Kühlung der Rohgase ablaufende Flüssigkeit nach einer Teerscheidung und Filtration durch eine Entphenolungsanlage und einen Ammoniakabtreiber geleitet und anschliessend durch Ultrafiltration bzw. Umkehrosmose behandelt.

Aufgabe der Erfindung ist es, ein Verfahren der eingangs definierten Art vorzuschlagen, durch das eine weitgehend abwasserlose Kokerei möglich wird.

Die erfindungsgemässe Lösung dieser Aufgabe besteht in der Kombination der folgenden Verfahrensschritte:

a) Kühlung der bei der Verkokung anfallenden Kondensate in der Vorlage und den Vorkühlern,
b) Teerscheidung,
c) Filtration,
d) Trennung der Gaskondensate mittels Umkehrosmose in ein in den Kokereiprozess rückführbares Permeat und ein Konzentrat,
e) Entphenolung der Gaskondensate vor der Umkehrosmose oder nur des Konzentrates nach der Umkehrosmose,
f) Abtrieb des Ammoniaks aus dem Konzentrat unter Zugabe von Alkali in Form von NaOH.

Dabei geht die Erfindung von dem Gedanken aus, das Gaskondensat von der Salzfracht weitgehend zu befreien. Nach der Erfindung wird das mittels Umkehrosmose erreicht. Mittels der Umkehrosmose wird das Gaskondensat in ein in den Kokereiprozess rückführbares salzarmes Permeat und eine konzentrierte Lauge überführt. Die konzentrierte Lauge lässt sich in einer Verdampferanlage mit auf der Kokerei ohnehin verfügbarer Abwärme aufarbeiten. Das Permeat kann beispielsweise für die Ammoniakwäsche als Zusatzwasser für die Kreislaufkühlung oder zur Steuerung des Vorlagenkreislaufs sowie zum Löschen des Kokses verwendet werden.

Zur Schonung der Module werden die Kondensate vor dem Eintritt in die Osmose-Anlage gefiltert. Die Filtration besteht vorzugsweise aus einer Kombination von Rückspülfilter, Kiesfilter und Feinstfilter. Durch das Filtern werden die Schwebestoffe aus den Kondensaten entfernt, die zu einem Fouling in dem Modul führen können.

Ferner trägt zur Standzeit der Module bei, dass erfindungsgemäss die Umkehrosmose erst nach der Teerwäsche erfolgt.

Die Trennung der Kokereikondensate durch Umkehrosmose in zwei Fraktionen von sehr unterschiedlicher Beschaffenheit kann an einer Reihe von Betriebspunkten der Kokereigasaufbereitung (Kohlenwertstoffanlage) erfolgen. Insbesondere ist die Umkehrosmose für den Einsatz vor oder nach der Entphenolung oder nach dem Ammoniakabtreiber vorgesehen.

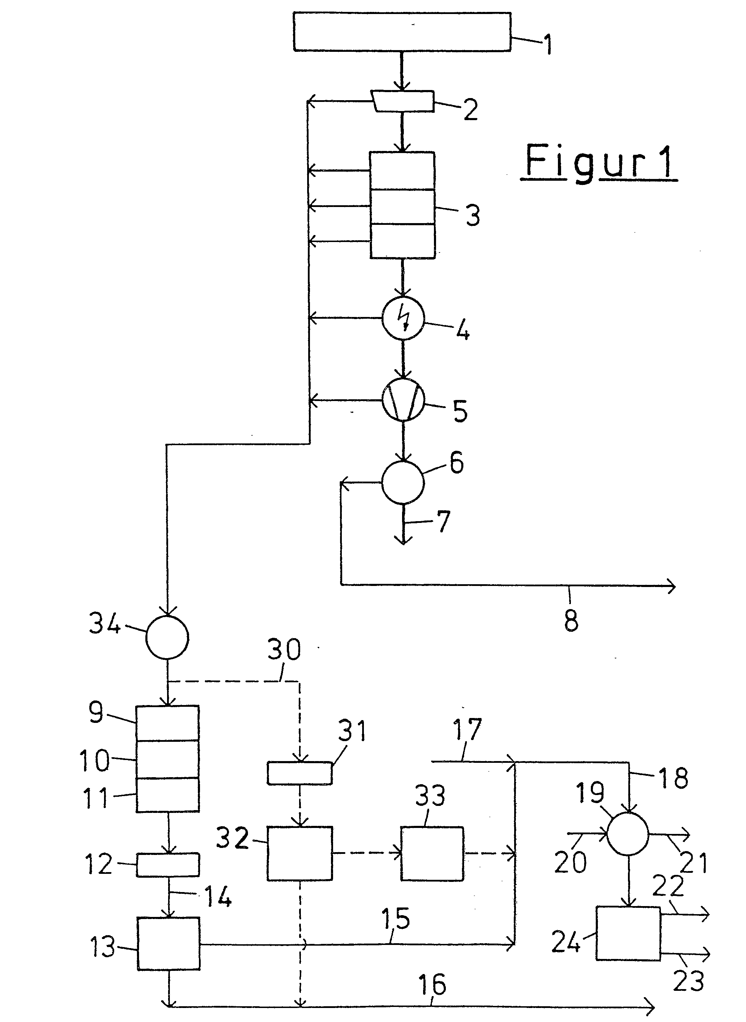

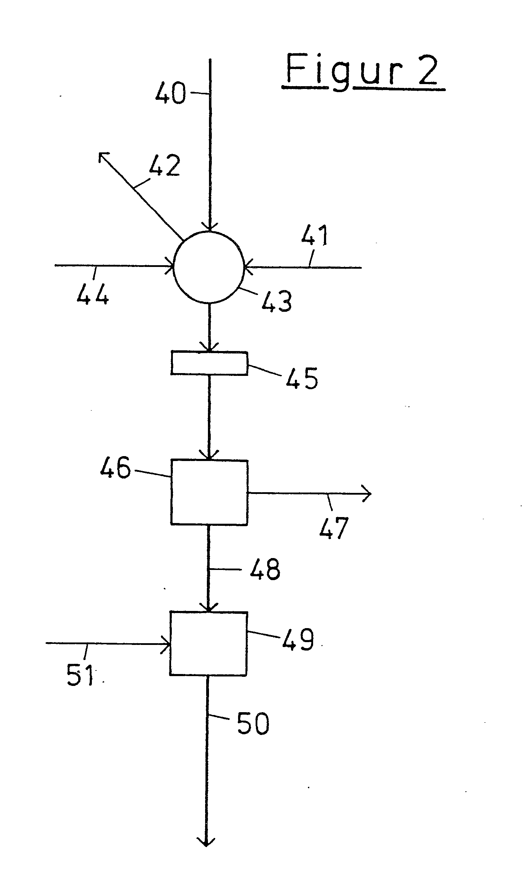

Nachfolgen sind zwei erfindungsgemässe Beispiele zur Aufarbeitung von Gaskondensaten anhand von Fig. 1 und 2 erläutert.

*Beispiel 1:*

Kohleneinsatz: 1000 t/d
$H_2O$-Gehalt: 10%
Bildungswasser: 3,5%
Kondensatanfall insgesamt: 13% = 135 m³/d

Die Kondensate werden zunächst über ein Kiesfilter und dann über einen Teerwascher geführt. Dabei werden die Sink- und Schwebstoffe und die Teeröle entfernt. Daran schliesst sich die Phenolauswaschung mit einem Schwerbenzolgemisch an, mit einem Wirkungsgrad 92%. Der Salzgehalt bleibt unbeeinflusst. An Verunreinigungen enthält das ablaufende Wasser im Druchschnitt:
Phenole: 0,12 g/l
Pyridine: 0,10 g/l
Abdampfrückstand: 11,82 g/l
fl. Bestandteile: 2,80 g/l

Salze ges.: 14,62 g/l, dav. $NH_3$ ges. 6,43 g/l; $NH_3$ fl. 2,80 g/l; $NH_3$ fix 3,63 g/l; Cl fix 6,88 g/l = 10,37 g $NH_4Cl$/l

Bei einer Betriebstemperatur von 35°C und einem Betriebsdruck von 56 bar wird eine Permeat-Ausbeute von 75% mit einem Salzschlupf von 1,5% erreicht. Dementsprechend sind folgende Betriebswerte zu erwarten:

Permeat: 101,25 m³/d

mit einer Salzfracht von: 29,6 kg

Konzentrat: 33,75 m³/d

mit einer Salzfracht von: 1944,1 kg

Zum Aufschluss der fixen Ammonsalze wird Alkali in Form von NaOH zugesetzt.

NaOH-Bedarf: 135 m³ · 3,63 kg/m³ · 2,3485 = 1150,9 kg + 10 ≈ Überschuss = 1266 kg/d.

Wird das Alkali als 5%ige Lösung eingesetzt, erhöht sich die zu verarbeitende Konzentrat-Menge um 25,32 auf 59,07 m³. Die Salzfracht erhöht sich durch den Alkalizusatz von 1944,1 um 1266 auf 3210,1 kg. Durch die Behandlung des Konzentrats mit Dampf in einem Abtreiber werden freigesetzt: 855 kg $NH_3$, 372 kg $H_2S$, $CO_2$, HCN, gesamt: 1227 kg.

Die Abtreiber-Ablaufmenge erhöht sich durch das Dampfkondensat auf 65 m³. Diese enthalten 3210,1−1227 = 1983,1 kg Salz, die weitestgehend als Natriumchlorid vorliegen. In einer mit Abwärme betriebenen Vakuum-Verdampferanlage wird diese Menge aufgearbeitet. Das anfallende Salz wird einer kommerziellen Weiterverwendung zugeführt, beispielsweise Streusalz o. ä. Wird auf den Einsatz eines Alkalis verzichtet, besteht das anfallende Salz hauptsächlich auf Ammonchlorid.

*Beispiel 2:*

Die Umkehrosmose wird erst am Ablauf des Abtreibers eingesetzt. Die Salzmengen sind die gleichen wie in Beispiel 1, allerdings die Wassermengen sind unterschiedlich.

Die aus der Entphenolung kommenden 135 m³ Kondensat werden mit 5%iger Natronlauge zum Aufschluss der fixen Ammonsalze zusammengeführt, so dass sich die Aufgabemengen auf den Abtreiber auf 160 m³ erhöhen. Durch das Dampfkondensat erhöht sich die Abtreiberablaufmenge auf ca. 175 m³. Hieraus werden in der Umkehrosmose 131 m³ Permeat gewonnen. Die einzudampfende Konzentrat-Menge beläuft sich auf 44 m³.

Gegenüber dem Einsatzbeispiel 1 verringert sich in Beispiel 2 die einzudampfende Konzentratmenge um etwa 1/3. In beiden Fällen kann auf die Ableitung irgendwelcher Abwassermengen in die Vorflut verzichtet werden, so dass auf diese Weise der abwasserlose Kokereibetrieb realisierbar wird.

Wenn auf die konventionelle Entphenolung verzichtet wird und das Gaskondensat mit vollem Phenolgehalt der Umkehrosmose zugeführt wird, bleiben 95% des Phenols im Konzentrat und werden vor der Eindampfung aus diesem durch bekannte Entphenolungsprozesse entfernt.

Durch Einsatz der Umkehrosmose für die Aufbereitung von Gaskondensaten in Kokereien können die heute erforderlichen aufwendigen Reinigungseinrichtungen wie beispielsweise biologische Kläranlagen entfallen. Neben der Einsparung von Frischwasser werden auf diese Weise auch Abwassergebühren vermieden.

In der Zeichnung sind 2 Ausführungsbeispiele der Erfindung schematisch dargestellt. Es zeigen:

Fig. 1 das Schema einer Rohgasaufbereitung unter erfindungsgemässem Einsatz der Umkehrosmose, wobei eine Entphenolungsanlage vorgeschaltet ist und eine Konzentratentphenolung erfolgt.

Fig. 2 zeigt den erfindungsgemässen Einsatz der Umkehrosmose hinter $NH_3$-Abtreibern.

Nach Fig. 1 werden die in Koksofenbatterien 1 mit einer Leistung von 1000 t/d anfallenden Kokereigase zunächst einer Teervorlage 2, dann einer Vorkühlung 3, einem Elektrofilter 4 und über einen Gassauger 5 einer $H_2S$-$NH_3$-Wäsche zugeführt. In der $H_2S$-$NH_3$-Wäsche 6 fällt Gas 7 an, das einer Benzolwäsche zugeführt wird, während der mit 8 bezeichnete Strom der Waschflüssigkeit zur $NH_3$-Fabrik geleitet wird.

Sowohl in der Teervorlage 2, als auch in der Vorkühlung 3, dem Elektrofilter 4 und dem Gassauger 5 fallen Kondensate an, die nach Fig. 1 über eine Teerscheidung 34 einer Entphenolung zugeführt werden. Auf diesem Wege passieren die Kondensate ein Kiesfilter 9 und einen Teerwascher 10, bevor sie in die Entphenolung 11 gelangen.

Der Entphenolung ist ein Feinfilter 12 nachgeschaltet, aus dem die Kondensate in eine Umkehrosmoseanlage 13 treten. In der Umkehrosmoseanlage entsteht bei einem Kondensatanfall, der bei 14 135 m³/d beträgt, eine Konzentratmenge von 33,75 m³/d mit 1944,1 kg Salzen und eine Permeatmenge von 101,25 m³/d mit 29,6 kg Salzen. Der Permeatstrom ist mit 16 bezeichnet und zur erfindungsgemässen Wiederverwendung bestimmt, während der mit 15 bezeichnete Konzentratstrom einem Abtreiber 19 zugeführt wird. Vorher erfährt der Konzentratstrom bei 17 zum Beispiel einen Zusatz von 5prozentiger NaOH mit einer Menge von 25,32 m³/d. Diese Menge entspricht 1266 m³/d. Durch den NaOH-Zusatz steigt die zum Abtreiber geführte Konzentratmenge auf 59,07 m³/d.

Im $NH_3$-Abtreiber 19 wird mit Hilfe von Dampf, dessen Zuführung schematisch mit 20 bezeichnet ist, Brüden erzeugt, die einer Weiterverarbeitung zugeführt werden. Es fallen 855 kg $NH_3$ und 372 kg $H_2S$/$CO_2$/HCN an. Der Rückstand wird in einem Vakuumverdampfer 24 behandelt. Dabei entsteht ein Kondensat, das einer Weiterverwendung zugeführt wird, und Salz, das als Streusalz geeignet ist. Der Kondensataustritt ist mit 22, der Salzaustritt mit 23 bezeichnet.

Alternativ zu der oben beschriebenen Entphenolung ist auch eine Kondensatbehandlung ohne Entphenolung möglich. Die Alternative ist in Fig. 1 gestrichelt dargestellt und mit 30 bezeichnet. Dabei wird wieder von einer Kondensatmenge von 135 m³/d ausgegangen, die einem Feinfilter 31 zugeführt wird. Dem Feinfilter 31 ist eine Umkehrosmoseanlage 32 nachgeschaltet. Aus der Umkehrosmose 32 fallen ein mit 33 bezeichnetes Konzentrat und ein Permeat an. Das mit 33 bezeichnete Konzentrat enthält 95% des ursprünglich im Kondensat enthaltenen Phenols. Das Konzentrat 33 und das gleichzeitig anfallende Permeat werden wie das Konzentrat 15 und das Permeat 16 weiterbehandelt.

Nach Fig. 2 wird das nach einer Teerscheidung anfallende Kondensat 40 einem Abtreiber 43 zugeführt. Dabei wird wiederum von einer Zulaufmenge von 135 m³/d ausgegangen. Im NH₃-Abtreiber 43 entstehen unter dem Zusatz von Dampf und NaOH Brüden, die der Weiterverarbeitung zugeführt werden, während der Ablauf einem Feinfilter 45 zugeführt wird. Der NaOH-Zusatz ist 5prozentig und beträgt 25 m³/d. Die Dampfzuführung ist schematisch mit 41, der NaOH-Zusatz mit 44 bezeichnet. Die Ablaufmenge aus dem NH₃-Abtreiber 43 beträgt 175 m³/d.

Nach dem Feinfilter 45 gelangt das Kondensat in eine Umkehrosmoseanlage 46. Dort entstehen ein zur Wiederverwendung bestimmtes Permeat und ein Konzentrat. Der mit 47 bezeichnete Permeatstrom beträgt 131 m³/d, der mit 48 bezeichnete Konzentratstrom 44 m³/d.

Der Konzentratstrom 48 gelangt in einen Vakuumverdampfer 49, der mit Abwärme betrieben wird, deren Zuführung schematisch mit 51 bezeichnet ist. Aus dem Vakuumverdampfer fällt wie bei dem Beispiel nach Fig. 1 Salz an, das als Streusalz verwendet werden kann. Der Salzanfall ist in schematischer Darstellung mit 50 bezeichnet.

## Patentansprüche

1. Verfahren zur Behandlung von Gaskondensaten aus der Verkokung, bestehend aus der Kombination folgender Verfahrensschritte:

   a) Kühlung der bei der Verkokung anfallenden Kondensate in der Vorlage und den Vorkühlern,

   b) Teerscheidung,

   c) Filtration,

   d) Trennung der Gaskondensate mittels Umkehrosmose in ein in den Kokereiprozess rückführbares Permeat und ein Konzentrat,

   e) Entphenolung der Gaskondensate vor der Umkehrosmose oder nur des Konzentrates nach der Umkehrosmose,

   f) Antrieb des Ammoniaks aus dem Konzentrat unter Zugabe von Alkali in Form von NaOH.

2. Verfahren nach Anspruch 1, dadurch gekennzeichnet, dass zur Filtration eine Kombination aus Rückspülfilter, Kiesfilter und Feinstfilter verwendet wird und die Gaskondensate zusätzlich einer Teerwäsche unterzogen werden.

## Claims

1. Process for the treatment of gas condensates obtained from the coal carbonization process, said process being comprised of the individual process stages set forth below:

   (a) cooling of gas condensates obtained from the coal carbonization process in the gas collection main and primary coolers,

   (b) tar separation,

   (c) filtration,

   (d) separation of gas condensates by means of the reverse osmosis into a permeate, which can be recycled into the coal carbonization process, and into a concentrated lye,

   (e) dephenolization of the gas condensates prior to the reverse osmosis or dephenolization of the concentrated lye after the reverse osmosis,

   (f) decantation of the ammonia from the concentrated lye by the addition of alkali in the form of NaOH.

2. Process according to Claim 1, wherein a combination of a backwash filter, a gravel filter and a fine filter is utilized for the filtration and wherein the gas condensates are additionally subjected to a tar scrubbing process.

## Revendications

1. Procédé pour le traitement des condensats du gaz produit par la cokéfaction, caractérisé par une combinaison des étapes ci-après:

   a) réfrigération des condensats produits dans le barillet et dans les condenseurs primaires lors de la cokéfaction,

   b) décantation du goudron,

   c) filtrage,

   d) séparation des condensats du gaz par osmose réversible en un perméat qui peut être recyclé dans le procès de cokéfaction et un concentrat,

   e) déphénolage des condensats du gaz avant l'osmose réversible ou du concentrat seulement après l'osmose réversible,

   f) distillation de l'ammoniac contenu dans le concentrat avec adjonction d'un alcali sous forme de NaOH.

2. Procédés d'après la revendication 1, caractérisés par le fait que, pour le filtrage, on utilise une combinaison de filtre à lavage en contre-courant, de filtres à gravier et de filtre de séparation des parcelles ultrafines, et que les condensats du gaz sont soumis à un lavage complémentaire au goudron.

.. 

Figur 1

Figur 2